# EUROPEAN PATENT APPLICATION

(11) **EP 4 342 612 A1**
(43) Date of publication of application: **27.03.2024**
(21) Application number: 23199065.6
(22) Date of filing: 22.09.2023
(51) Int. Cl.: B23B 51/04

(54) **HOLESAW SYSTEM**

(30) Priority: 23.09.2022 US 202263376904 P; 21.09.2023 US 202318471366
(71) Applicant: Black & Decker Inc., New Britain, CT 06053 (US)
(72) Inventor: BRANDIN, Jackson Mead, West Springfield, 01089 (US); NOVAK, Joseph T., East Longmeadow, 01028 (US); GREEN, Matthew Christopher, Amherst, 01002 (US); PROULX, Jeffrey Charles, Wilbraham, 01095 (US); SERPA, Leonardo Altermann, Carlos Barbosa (BR); SAVARINO, Matthew, Simsbury, 01128 (US); HUNTER, Joseph, Charlotte, 28212 (US); SANOGO, Poinon Z., Enfield, 06082 (US); LOURENCO, Marco, Baltimore, 21230 (US); REIST, Andrew C., Springfield, 01128 (US); HALL, Kenneth, East Longmeadow, 01028 (US)
(74) Representative: SBD IPAdmin

(57) **Abstract**

A holesaw system (10) comprises a holesaw (20) including a base (22) and a generally cylindrical wall (24) with a proximal end coupled to the base and a distal end with a cutting edge (26); a pilot drill bit (30) including a front cutting tip (36), a rear shank portion (32), and an intermediate portion (34) between the front cutting tip and the rear shank portion; and an arbor (40) coupleable to the holesaw and to the pilot drill bit. The arbor is configured to be operable in a first mode in which the holesaw and the pilot drill bit are rotatable in unison to form a hole in a workpiece and in a second mode in which the pilot drill bit is rotatable independently of the holesaw to remove a plug of material from the holesaw.

## Description

### RELATED APPLICATIONS

This application claims priority to U.S. Provisional Application No. 63/376,904, filed September 23, 2022, and US Non-Provisional Application No. 18/471,366, filed September 21, 2023, which are incorporated by reference.

### TECHNICAL FIELD

This application relates to a holesaw system.

### BACKGROUND

Holesaws are generally used with a drill to form large diameter holes in a workpiece. A holesaw generally has a circular base and a cylindrical peripheral edge with a plurality of teeth or other cutters coupled to the peripheral edge. A holesaw may be coupled to a tool holder (e.g., a chuck) of a drill by an arbor to which the holesaw is removably coupled. A pilot drill bit also may be removably coupled to the arbor and may enter the workpiece before the holesaw in order to form a pilot hole in the workpiece.

In use, the holesaw generally forms a cylindrical plug of material that is removed from the workpiece. The plug may become stuck inside the peripheral wall of the holesaw. Removing a plug from a holesaw may require use of a secondary tool (e.g., a screwdriver or similar implement) to access the plug from a side of the hole saw and pry it out. This process can be difficult and time consuming.

### SUMMARY

In an aspect, a holesaw system comprises a holesaw including a base and a generally cylindrical wall with a proximal end coupled to the base and a distal end with a cutting edge; a pilot drill bit including a front cutting tip, a rear shank portion, and an intermediate portion between the front cutting tip and the rear shank portion; and an arbor coupleable to the holesaw and to the pilot drill bit. The arbor is configured to be operable in a first mode in which the holesaw and the pilot drill bit are rotatable in unison to form a hole in a workpiece and in a second mode in which the pilot drill bit is rotatable independently of the holesaw to remove a plug of material from the holesaw.

Implementations of this aspect may include one or more of the following features. The arbor may be configured to be operable only in the first mode when the arbor rotates in a first direction and to be operable only in the second mode when the arbor rotates in a second direction opposite the first direction. The arbor may be operable in the first mode when the arbor rotates in both clockwise and counterclockwise directions and is operable in the second mode when the arbor rotates in both clockwise and counterclockwise directions. The arbor may include a holesaw holder portion couplable to the holesaw, a pilot bit holder portion coupleable to the pilot drill bit, and a decoupling mechanism configured to be operable in the first mode in which the holesaw holder portion is coupled to the pilot bit holder portion to rotate in unison with the pilot bit holder portion, and in the second mode in which the holesaw holder portion is decoupled from the pilot bit holder portion so that the pilot bit holder portion may rotate independently of the holesaw holder portion.

The decoupling mechanism may include a one-way drive mechanism coupled to the holesaw holder portion and to the pilot bit holder portion, the one-way drive mechanism configured to rotatably drive the holesaw holder portion when the pilot bit holder portion rotates in a first direction and configured not to drive the holesaw holder portion when the pilot bit holder portion is rotated in a second direction opposite the first direction. The one-way drive mechanism may include a drive pawl coupled to one of the holesaw holder portion or the pilot bit holder portion and a one-way drive tooth coupled to the other of the holesaw holder portion or the pilot bit holder portion, the drive pawl configured to be driven by the drive tooth when the pilot bit holder portion rotates in the first direction and to slip over the drive tooth when the pilot bit holder portion rotates in the second direction.

The decoupling mechanism may include a two-way drive mechanism coupled to the holesaw holder portion and to the pilot bit holder portion and an actuator movable between a first position and a second position, wherein, when the actuator is in the first position, the two-way drive mechanism is configured to rotatably drive the holesaw holder portion in unison with the pilot bit holder, regardless of a direction of rotation of the pilot bit holder, and wherein, when the actuator is in the second position, the two-way drive mechanism is configured to decouple the holesaw holder portion from the pilot bit holder so that the pilot bit holder rotates independent of the holesaw holder portion, regardless of the direction of rotation of the pilot bit holder. The two-way drive mechanism may include a drive member carried by one of the holesaw holder portion or the pilot bit holder portion and configured to be engageable with a driven member in the other of the holesaw holder portion or the pilot bit holder portion when the actuator is in the first position, and to move out of engagement with the recess when the actuator is in the second position.

The actuator may be moveable to a third position in which at least one of the holesaw and the pilot bit are removable from the arbor. When operable in the second mode, the arbor may be configured to cause the pilot drill bit to be angled relative to the axis of the arbor. The intermediate portion may include a frictional surface configured to frictionally engage an interior of a plug formed by the holesaw. The frictional surface may include a thread.

In another aspect, a holesaw arbor includes a holesaw holder portion coupleable to a holesaw, a pilot drill bit holding portion coupleable to a pilot drill bit, and a decoupling mechanism coupled to the holesaw holder portion and to the pilot bit holder portion. The decoupling mechanism is operable in a first mode in which the decoupling mechanism is configured to rotatably drive the holesaw holder portion in unison with the pilot bit holder to form a hole in a workpiece, and in a second mode in which the decoupling mechanism is configured not to drive the holesaw holder portion when the pilot bit holder portion is rotated to remove a plug of material from the holesaw.

Implementations of this aspect may include one or more of the following features. The decoupling mechanism may include a one-way drive mechanism coupled to the holesaw holder portion and to the pilot bit holder portion. The one-way drive mechanism may be configured to rotatably drive the holesaw holder portion when the pilot bit holder portion rotates in a first direction and configured not to drive the holesaw holder portion when the pilot bit holder portion is rotated in a second direction opposite the first direction. The one-way drive mechanism may include a drive pawl coupled to one of the holesaw holder portion or the pilot bit holder portion and a one-way drive tooth coupled to the other of the holesaw holder portion or the pilot bit holder portion, the drive pawl configured to be driven by the drive tooth when the pilot bit holder portion rotates in the first direction and to slip over the drive tooth when the pilot bit holder portion rotates in the second direction..

The decoupling mechanism may include a two-way drive mechanism coupled to the holesaw holder portion and to the pilot bit holder portion and an actuator movable between a first position and a second position, wherein, when the actuator is in the first position, the two-way drive mechanism is configured to rotatably drive the holesaw holder portion in unison with the pilot bit holder, regardless of a direction of rotation of the pilot bit holder, and wherein, when the actuator is in the second position, the two-way drive mechanism is configured to decouple the holesaw holder portion from the pilot bit holder so that the pilot bit holder rotates independent of the holesaw holder portion, regardless of the direction of rotation of the pilot bit holder. The two-way drive mechanism may include a drive member carried by one of the holesaw holder portion or the pilot bit holder portion and configured to be selectively engageable with a driven member in the other of the holesaw holder portion or the pilot bit holder portion when the actuator is in the first position, and to move out of engagement with the recess when the actuator is in the second position. The actuator may be moveable to a third position in which at least one of the holesaw and the pilot bit are removable from the arbor. When operable in the second mode, the arbor may be configured to cause the pilot drill bit to be angled relative to the axis of the arbor.

In another aspect, a holesaw system includes a holesaw including a base and a generally cylindrical wall with a proximal end coupled to the base and a distal end with a cutting edge; a pilot drill bit including a front cutting tip, a rear shank portion, and an intermediate portion between the front cutting tip and the rear shank portion; and a decoupling mechanism coupled to the holesaw and to the pilot drill bit. The decoupling mechanism may be operable in a first mode in which the decoupling mechanism is configured to rotatably drive the holesaw in unison with the pilot drill bit, and in a second mode in which the decoupling mechanism is configured to decouple the holesaw from the pilot bit so that the pilot bit may rotate independently of the holesaw.

In another aspect, a holesaw system includes a holesaw, an arbor coupleable to the holesaw, and a pilot drill bit coupleable to the arbor. The holesaw includes a generally circular base and a generally cylindrical wall with a proximal end coupled to the base and a distal end with a plurality of teeth or cutters. The arbor includes a holesaw holder portion that is coupleable to the base of the holesaw, a pilot bit holder portion that is coupleable to the pilot drill bit, and a shank portion coupleable to an output of a rotary power tool, such as a drill or drill/driver. The pilot drill bit includes a rear end portion couplable to the pilot bit holder of the arbor, an at least partially threaded intermediate portion coupled to the rear end portion, and a front cutting tip coupled to a front end of the intermediate portion. While the holesaw and the pilot are coupled to the arbor, the arbor is operable in a first mode in which the holesaw and the pilot drill bit are rotatable in unison to form a hole in a workpiece and in a second mode in which the pilot drill bit is rotatable independently of the holesaw to remove a plug of material from the holesaw without use of a secondary tool.

Advantages may include one or more of the following. The holesaw system enables easier removal of a plug from the holesaw without use of a secondary tool and without prying the plug out of the holesaw. These and other advantages and features will be apparent from the description, the drawings, and the claims.

### BRIEF DESCRIPTION OF THE DRAWINGS

FIG. 1 is an exploded view of an embodiment of a holesaw system.
FIGS. 2 and 3 are perspective views of the holesaw system of FIG. 1.
FIG. 4 is a side view of the holesaw system of FIG. 1.
FIG. 5 is a cross-sectional view of the holesaw system of FIG. 1 taken along line C-C.
FIG. 6 is a cross-sectional view of the holesaw system of FIG. 1 taken along line B-B, showing the shank portion rotating in a first direction.
FIG. 7 is a cross-sectional view of the holesaw system of FIG. 1 taken along line B-B, showing the shank portion rotating in an opposite second direction.
FIG. 8 is a side view, partially in phantom, of the holesaw system of FIG. 1, showing the drive pins in their forward position.
FIG. 9 is a side view, partially in phantom, of the holesaw system of FIG. 1, showing the drive pins in their retracted position.
FIG. 10 is a side view of another embodiment of a holesaw system.
FIGS. 11A-11C are cross-sectional views in planes parallel to, at 45° to, and perpendicular to the plane of the paper, respectively, of the holesaw system of FIG. 10 with the actuator in a first position.
FIGS. 12A-12C are cross-sectional views in planes parallel to, at 45° to, and perpendicular to the plane of the paper, respectively, of the holesaw system of FIG. 10 with the actuator in a second position.
FIGS. 13A-13C are cross-sectional views in planes parallel to, at 45° to, and perpendicular to the plane of the paper, respectively, of the holesaw system of FIG. 10 with the actuator in a third position.
FIG. 14 is a cross-sectional view of the holesaw system of FIG. 10 taken along line D-D.
FIG. 15 is a side view of another embodiment of a holesaw system.
FIGS. 16A-16C are cross-sectional views in planes parallel to, at 45° to, and perpendicular to the plane of the paper, respectively, of the holesaw system of FIG. 15 with the actuator in a first position.
FIGS. 17A-17C are cross-sectional views in planes parallel to, at 45° to, and perpendicular to the plane of the paper, respectively, of the holesaw system of FIG. 15 with the actuator in a second position.
FIGS. 18A-18C are cross-sectional views in planes parallel to, at 45° to, and perpendicular to the plane of the paper, respectively, of the holesaw system of FIG. 10 with the actuator in a third position.
FIGS. 19A-19C are cross sectional views of the holesaw system of FIG. 10, with the actuator in the first, second, and third positions, respectively, taken along line E-E.

### DETAILED DESCRIPTION

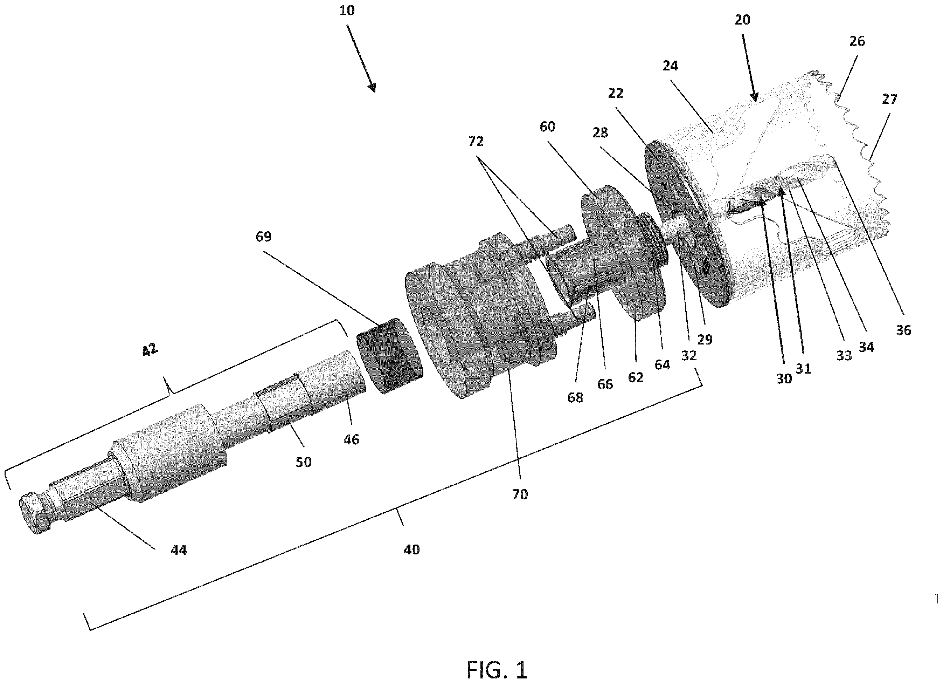

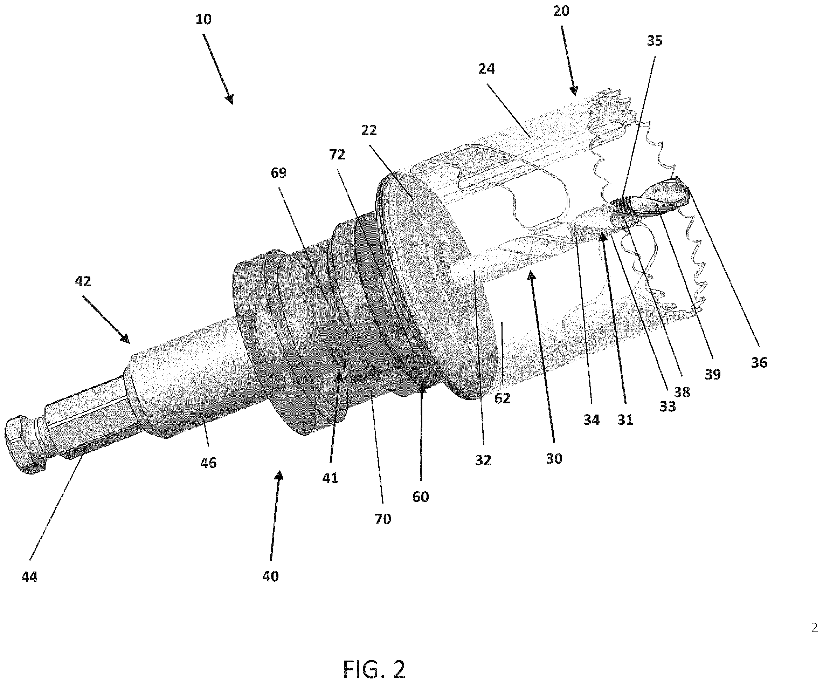

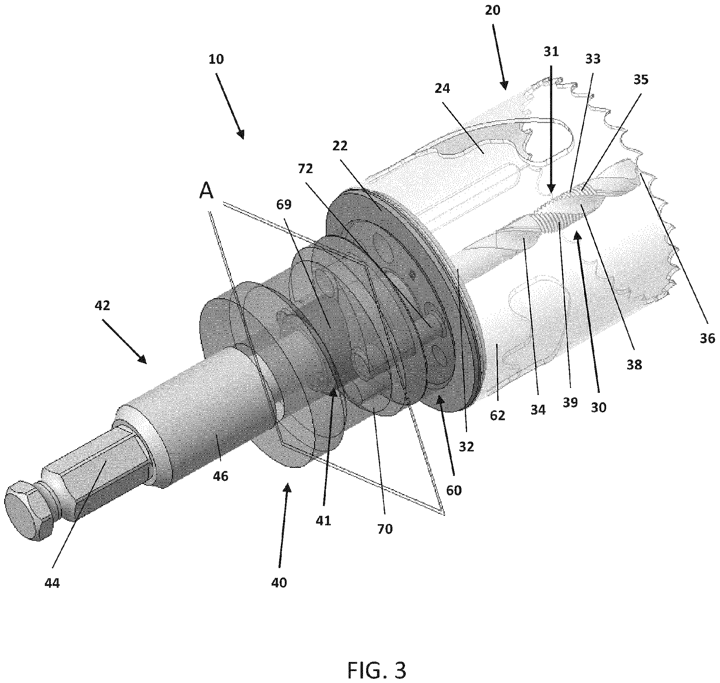

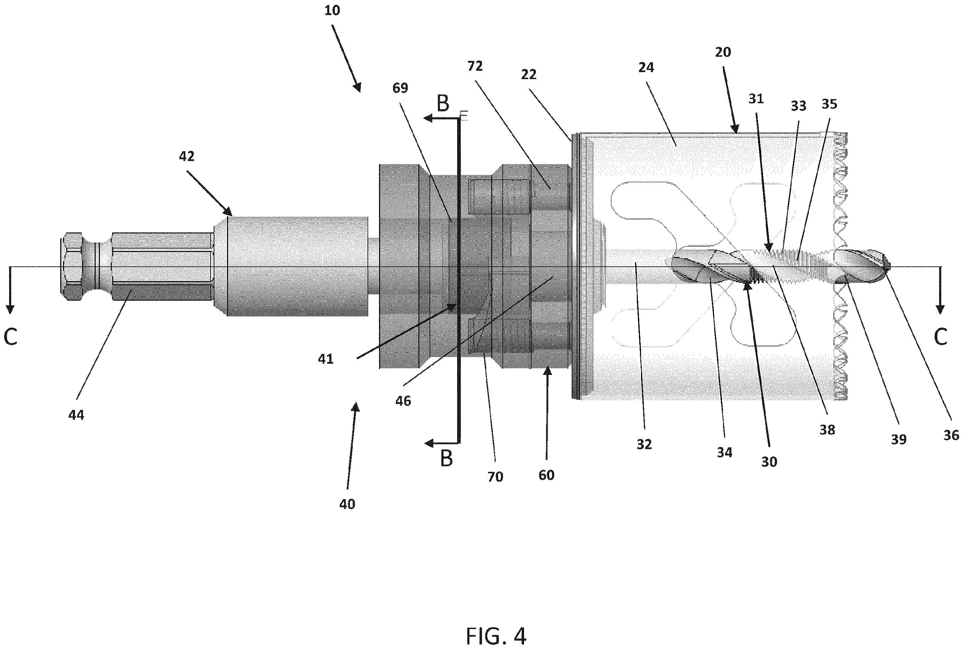

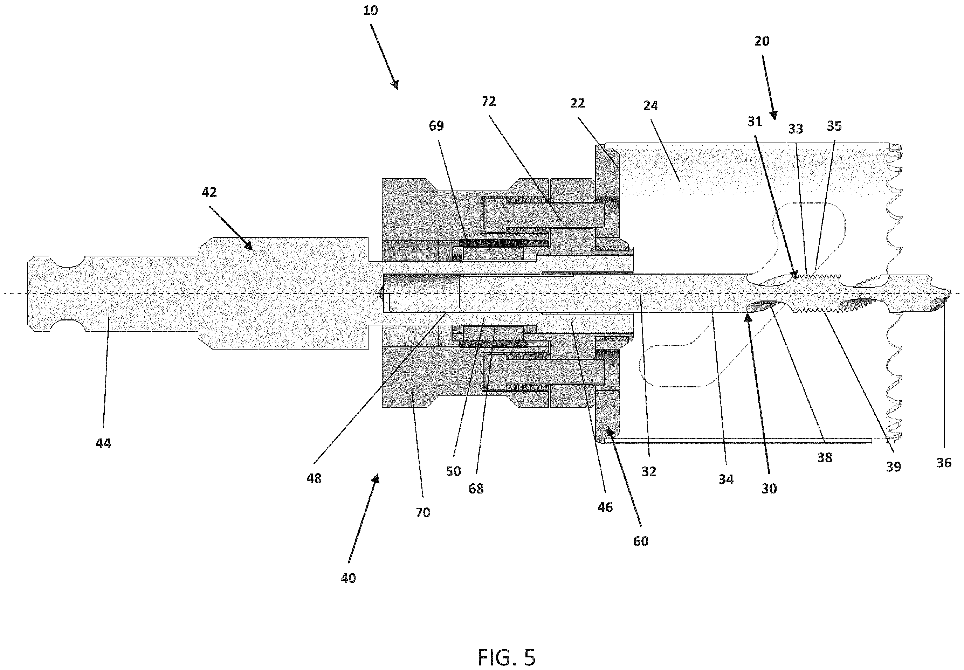

Referring to FIGS. 1-9, in an embodiment, a holesaw system 10 includes a holesaw 20, an arbor 40 coupleable to the holesaw 20, and a pilot drill bit 30 coupleable to the arbor 40. The holesaw 20 includes a generally circular base 22 and a generally cylindrical wall 24 with a proximal end coupled to the base 22 and a distal end with a cutting edge 26, which may include a plurality of teeth or cutters 27. The base 22 may include a central opening 28, which may be threaded, and one or more lateral openings 29. When rotatably driven by the arbor 40, the holesaw 20 is configured to form a generally circular hole in a workpiece by removing a generally cylindrical plug of material from the workpiece that is received inside the generally cylindrical wall 24.

The pilot drill bit 30 includes a rear end portion 32 couplable to the arbor 40, an intermediate portion 34, and a front cutting tip 36 coupled to a front end of the intermediate portion. The intermediate portion 34 includes at least one helical flute 38 for removing debris and cutting chips and at least one helical land 39 between adjacent turns of the flute 38. When the holesaw 20 is rotated to form a hole in the workpiece, the pilot drill bit 30 rotates together with the holesaw to form a pilot hole to facilitate entry of the holesaw into the workpiece, which pilot hole is generally in the center of the plug when the plug is removed.

The pilot drill bit 30 also includes a frictional surface 31 configured to frictionally engage the plug on the inside of the pilot hole formed by the pilot drill bit 30. In the embodiment illustrated in FIGS. 1-9, the frictional surface 31 includes an at least partially threaded portion 33 formed of at least one thread 35 that is at least partially formed on the land(s) 39 between the flute(s) 38. The at least one thread 35 has a finer pitch than the helical flute and is configured to cut a thread in the interior of the plug that can receive swarf to frictionally engage the pilot drill bit 30 with the plug. In one implementation, the helical flute 38 and the thread 35 are wrapped around the intermediate portion in the same direction (e.g., either right handed or left handed, or clockwise or counterclockwise). In other implementations, the thread 35 may wrap around the intermediate portion in the opposite direction of the helical flute 38. In further embodiments, the frictional surface 31 may additionally or alternatively include other frictional features, such as ribs, dimples, coatings, grit, or abrasive material. The frictional surface 31 may extend along a portion or an entirety of the length and/or circumference of the intermediate portion 34.

The arbor 40 includes a shank portion 42 with a rear end 44 (which may be round or polygonal, e.g., hex shaped, in cross section and which is configured to be received in a tool holder or chuck of a power tool) and a front pilot bit holder portion 46 with a blind bore 48 for receiving the rear end portion 32 of the pilot drill bit 30. The pilot drill bit 30 may be held non-rotatably in the blind bore 48, e.g., by a set screw (not shown) or by a non-circular geometry (e.g., a hex or double-D geometry) so that they rotate in unison. The arbor 40 further includes a holesaw holder portion 60 configured to couple to the holesaw 20. The holesaw holder portion may include a disc shaped base 62 and a threaded stem 64 that is configured to be received in the threaded opening 28 in the base 22 of the holesaw 20. When the holesaw is threaded onto the threaded stem 64, the base 22 of the holesaw 20 abuts the base 58 of the holesaw holder 60, and the holesaw 20 will rotate in unison with the holesaw holder 60.

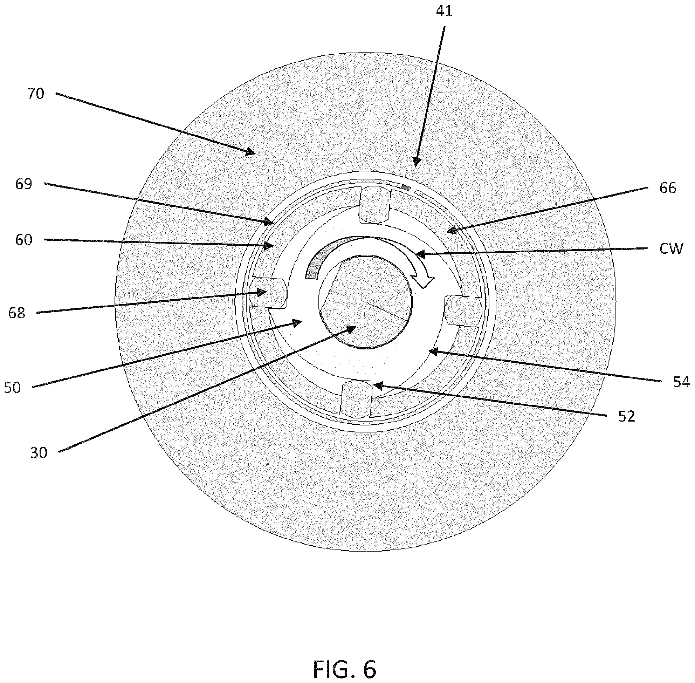

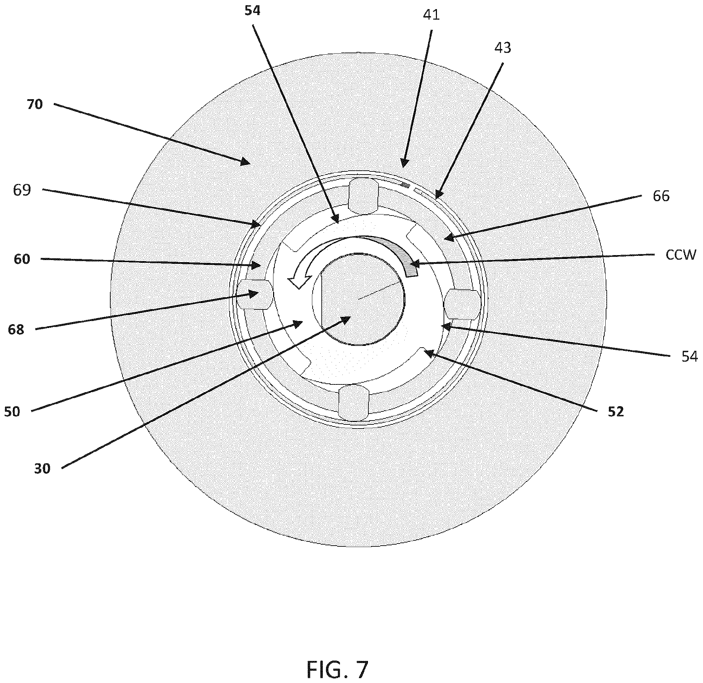

The arbor 40 also includes a decoupling mechanism 41 that is operable in a first mode where the pilot bit holder portion 46 and the holesaw holder portion 60 are configured to rotate in unison with the arbor 40, and a second mode where the pilot bit holder portion 46 and the holesaw holder portion 60 are decoupled so that they rotate independently of one another. In the embodiment illustrated in FIGS. 1-9, the decoupling mechanism 41 comprises a one-way drive mechanism 43. In the first mode, when the pilot bit holder portion 46 rotates in a first direction (e.g., clockwise or CW as shown in FIG. 6), the one-way drive mechanism 43 is configured to cause the holesaw holder portion 60 to rotate in the same direction in unison with the pilot bit holder portion 60. In the second mode, when the pilot bit holder portion 46 rotates in a second direction opposite the first direction (e.g., counterclockwise or CCW as shown in FIG. 7), the one-way drive mechanism 43 is configured not to drive the holesaw holder portion 60 together with the pilot bit holder portion 46 so that they can rotate independently of one another.

In the embodiment illustrated in FIGS. 1-9, the one-way drive mechanism 43 includes a drive sprocket 50 coupled to the shank portion 42 with a plurality of one-way drive teeth 52 separated by circumferential cam surfaces 54; and a cylindrical carrier 66 coupled to the holesaw holder portion 60 that carries a plurality of drive pawls 68 and that is receivable over the drive sprocket 50. The plurality of drive pawls 68 are moveable radially relative to the carrier 66 and are biased radially inward by a cylindrical band spring 69 that is received around the carrier 66. When the arbor 40 is rotated in the first (e.g., clockwise or CW) direction, the drive pawls 68 are engaged by the one-way drive teeth 52 on the drive sprocket 50 when the shank portion 42 of, causing the holesaw holder 60 to rotate in unison with the arbor 40. When the shank portion 42 of the arbor 40 is rotated in the opposite second (e.g., counterclockwise or CCW) direction, the one-way drive teeth 52 on the drive sprocket 50 disengage from the drive pawls 68, and the cam surfaces 54 cause the drive teeth 52 on the drive sprocket 50 to slip past the drive pawls 68 without re-engaging the drive pawls 68. Thus, when the shank portion rotates in the first direction, torque is transmitted from the shank portion 42 of the arbor 40 to the holesaw holder portion 60, and when the shank portion rotates in the second direction, torque is not transmitted from the shank portion 42 of the arbor 40 to the holesaw holder portion 60.

In alternative embodiments, other types of one-way driving mechanisms can be used. For example, the interface between the shank portion 42 of the arbor 40 and the holesaw holder 60 may include a ratcheting mechanism of the type used on a ratchet wrench, which also may be reversible to allow for driving the holesaw holder when rotating in both directions (e.g., a ratchet head of the type disclosed in U.S. Patent No. 10,335,929, which is incorporated by reference). In further embodiments, the interface between the shank portion 42 of the arbor 40 and the holesaw holder 60 may include a freewheel or free hub body of the type used on a bicycle to enable one-way driving (e.g., the type disclosed in U.S. Patent Application Publication 2007/0089960, which is incorporated by reference). In yet other embodiments, the one-way driving mechanism may include a one-way slip clutch of the type disclosed in U.S. Patent No. 8,789,413, which is incorporated by reference.

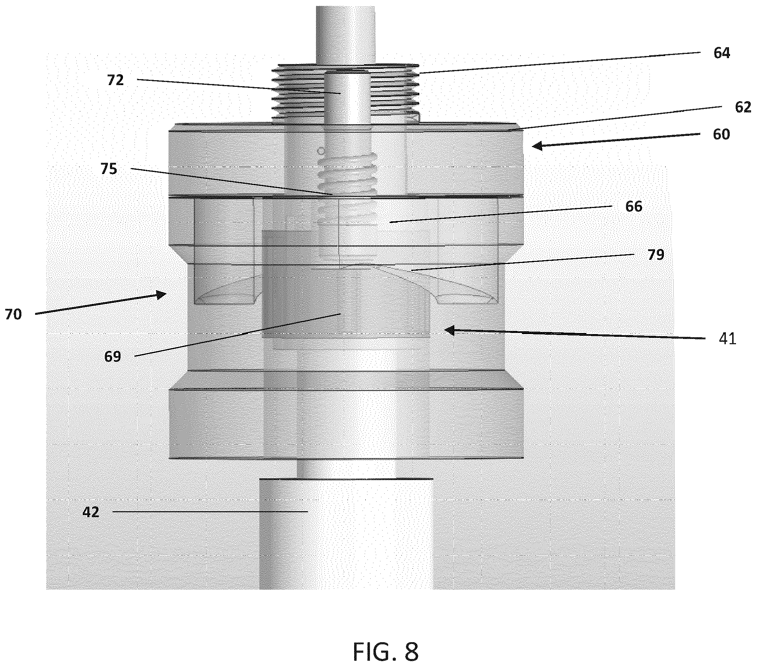

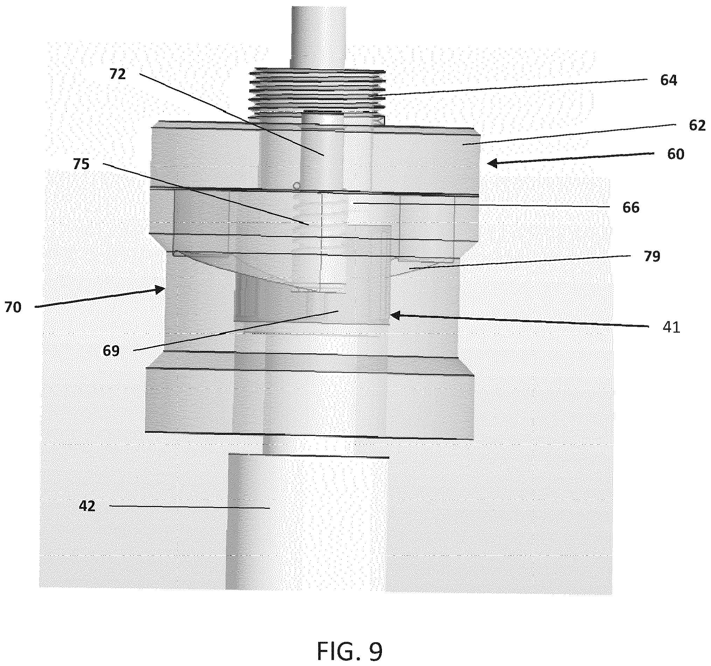

In the embodiment illustrated in FIGS. 1-9, the arbor 40 also optionally includes an actuator, e.g., in the form of a collar 70 receivable over the carrier 66 of the holesaw holder 60. The collar 70 may be coupled to a pair of drive pins 72 that are biased axially forward by springs 75 and that are receivable in lateral openings 65 in the base 62 of the holesaw holder 60 and in lateral openings 29 in the base 22 of the holesaw 20. The drive pins help prevent the holesaw 20 from becoming unthreaded from the threaded stem 64 and/or enhance torque transmission from the arbor 40 to the holesaw 20. The collar 70 may be axially and/or rotatably movable to retract the pins from the openings 29 in the base of the holesaw 20 in order to allow for installation or removal of the holesaw onto the threaded stem 64. For example, as shown in Figs. 8 and 9, the collar 70 may include a ramp 79 that engages the pins so that when the collar 70 is rotated, the pins retract into the collar. Other examples of mechanisms for retracting the pins are disclosed in U.S. Patent Nos. 7,073,992 and 8,366,356, and U.S. Patent Application No. 17/654,493, each of which are incorporated by reference.

In operation, while the holesaw 20 and the pilot drill bit 30 are coupled to the arbor 40 and the shank portion 42 of the arbor 40 is coupled to a power tool, the arbor 40 is operable in a first mode in which the holesaw 20 and the pilot drill bit 30 are rotatable in unison to form a hole in a workpiece and in a second mode in which the pilot drill bit 30 is rotatable independently of the holesaw 20 to remove a plug of material from the holesaw without use of a secondary tool. In the first mode, the shank portion 42 of the arbor 40 is rotatable in a first direction (e.g., clockwise as shown in FIG. 6), which causes the pilot drill bit 30 to rotate in the same direction. In this mode, the drive teeth 52 on the drive sprocket 50 of the shank portion engage and rotatably drive the drive pawls 68. Rotation of the drive pawls 68 causes rotation of the carrier 60 and the holesaw 20 that is coupled to the carrier in the same rotational direction as the arbor 40 and the pilot drill bit 30. Thus, in this mode, the holesaw 20 and the pilot drill bit 30 rotate in unison to form a hole in a workpiece. As the hole is being formed, the holesaw forms a plug of material that is received inside the cylindrical wall 24 of the holesaw 20. At the same time, the frictional surface 31 on the pilot drill bit 30 forms a frictional engagement with the plug. For example, the frictional engagement is caused by forming a thread in the pilot hole formed in the plug and by swarf generated during the cut becoming embedded in the thread. In other embodiments, friction can be enhanced by adding internal features on the inner walls of the of the holesawsuch as small dimples or internal threads, or by creating an asymmetric threaded section on the threaded pilot drill bit.

In the second mode, the shank portion 42 of the arbor 40 is rotated in an opposite second direction (e.g., counterclockwise as shown in FIG. 7), which causes the pilot drill bit to rotate in the same direction. In this mode, the drive teeth 52 on the drive sprocket 50 of the shank portion disengage from the drive pawls 68, and the cam surfaces 54 on the drive sprocket repeatedly push the drive pawls 68 radially outward against the force of the band spring 69 so that the pawls are not re-engaged by the drive teeth 52. Because the drive teeth 52 do not engage the drive pawls 68, the carrier slips relative to the shank portion, and the carrier and the holesaw do not rotate in unison with the shank portion and the pilot drill bit. In other words, the holesaw and the pilot drill bit are rotationally decoupled from one another. If a user holds the holesaw stationary (e.g., using his or her hand, pliers, a clamp, or a wrench), while using a power tool to rotate the shank portion in this second direction, rotation of the drill bit (which are oriented opposite to the second rotational direction) pushes the plug of material out of the holesaw. Thus, the plug of material can be removed from the holesaw without needing to use a secondary tool to pry the plug out of the holesaw.

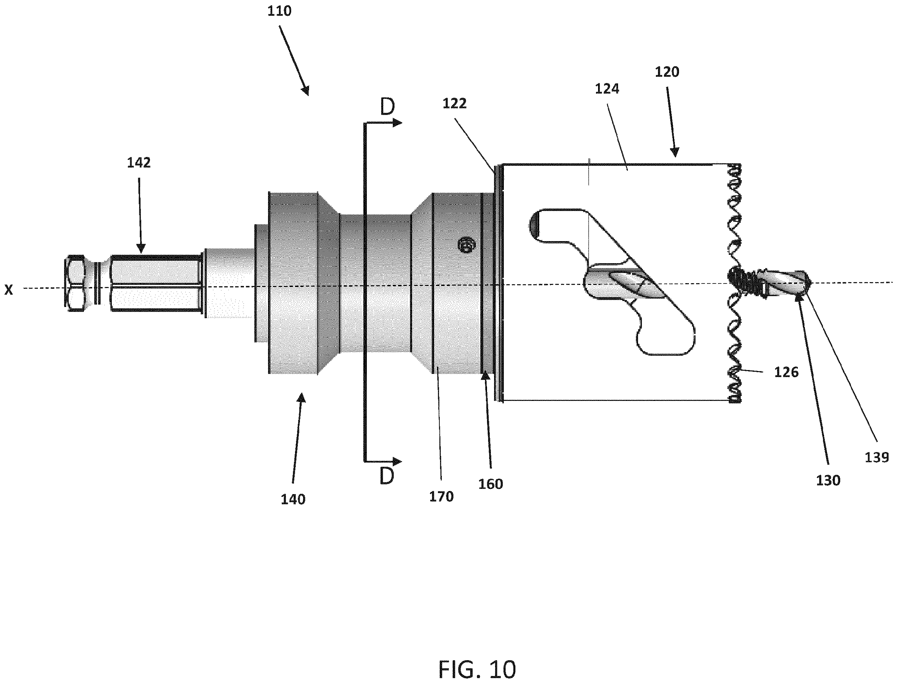

Referring to FIGS. 10-14, in another embodiment, a holesaw system 110 includes a holesaw 120, an arbor 140 coupleable to the holesaw 120, and a pilot drill bit 130 coupleable to the arbor 140, each extending along an axis X. The holesaw 120 and the pilot drill bit 130 have a substantially similar design as the holesaw 20 and pilot drill bit 30 described above with reference to FIGS. 1-9, except as otherwise noted below. The holesaw 120 includes a generally circular base 122 and a generally cylindrical wall 124 with a proximal end coupled to the base 122 and a distal end with a cutting edge 126.

The pilot drill bit 130 includes a rear end portion 132 couplable to the arbor 140, an intermediate portion 134, and a front cutting tip 136 coupled to a front end of the intermediate portion. The rear end portion 132 may be round, polygonal, hex shaped, have a flat, or another non-circular cross section to be non-rotatable relative to the arbor 140. The rear end portion 132 also may include a recess 180 the purpose of which is discussed below. The intermediate portion 134 includes at least one helical flute 138 for removing debris and cutting chips and at least one helical land 139 between adjacent turns of the flute 138. When the holesaw 120 is rotated to form a hole in the workpiece, the pilot drill bit 130 rotates together with the holesaw to form a pilot hole, which is generally in the center of the plug when the plug is removed. The pilot drill bit 130 also includes a frictional surface 131 similar to frictional surface 31, which may comprise an at least partially threaded portion formed of at least one thread that is at least partially formed on the land(s) 139 between the flute(s) 138.

The arbor 140 includes a shank portion 142 with a hex shaped rear end 144 and a front pilot bit holder portion 146 with a blind bore for receiving the rear end portion 132 of the pilot drill bit 130. The pilot drill bit 130 is held non-rotatably in the blind bore 148 , e.g., by a non-circular geometry (e.g., a hex or double-D geometry) so that they rotate in unison. The pilot drill bit is held axially in the blind bore 148 by a retaining ball 182 carried by the pilot bit holder portion 146 that selectively engages the recess 180 in the rear end portion 132 of the pilot drill bit 130. The arbor 140 further includes a holesaw holder portion 160 configured to be coupled to the holesaw 120. The holesaw holder portion 160 may include a disc shaped base 162 and a threaded stem 164 that is configured to be received in the threaded opening in the base 122 of the holesaw 120. The holesaw holder portion 160 also includes a cylindrical portion 184 extending away from the holesaw 120 that carries a cocking ball 186, the purpose of which will be described below.

The arbor 140 also includes a decoupling mechanism 141, similar to decoupling mechanism 41. The decoupling mechanism 141 is operable in a first mode where the pilot bit holder portion 146 and the holesaw holder portion 160 are configured to rotate in unison with the arbor 140, and a second mode where the pilot bit holder portion 146 and the holesaw holder portion 160 are decoupled so that they rotate independently of one another. In the embodiment illustrated in FIGS. 10-14, the decoupling mechanism 141 comprises a one-way drive mechanism 143, similar to the one-way drive mechanism 43 described above. In the first mode, when the pilot bit holder portion 146 rotates in a first direction (e.g., clockwise), the one-way drive mechanism 143 is configured to cause the holesaw holder portion 160 to rotate in the same direction in unison with the pilot bit holder portion 160. In the second mode, when the pilot bit holder portion 146 rotates in a second direction opposite the first direction (e.g., counterclockwise), the one-way drive mechanism 143 is configured not to drive the holesaw holder portion 160 together with the pilot bit holder portion 146 so that they can rotate independently of one another.

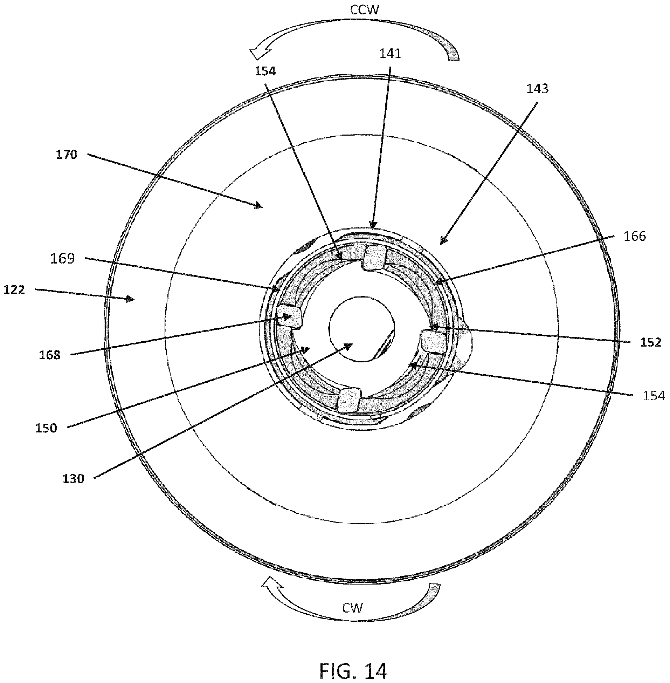

Referring to FIG. 14, the one-way drive mechanism 143 includes a drive sprocket 150 coupled to the shank portion 142 with a plurality of one-way drive teeth 152 separated by circumferential cam surfaces 154; and a cylindrical carrier 166 coupled to the holesaw holder portion 160 that carries a plurality of drive pawls 168 and that is receivable over the drive sprocket 150. The plurality of drive pawls 168 are moveable radially relative to the carrier 166 and are biased radially inward by a cylindrical band spring 169 that is received around the carrier 166. When the shank portion 142 of the arbor 140 is rotated in the first (e.g., clockwise or CW) direction, the drive pawls 168 are engaged by the one-way drive teeth 152 on the drive sprocket 150, causing the holesaw holder 160 to rotate in unison with the arbor 140. When the shank portion 142 of the arbor 140 is rotated in the opposite second (e.g., counterclockwise or CCW) direction, the one-way drive teeth 152 on the drive sprocket 150 disengage from the drive pawls 168, and the cam surfaces 154 cause the drive teeth 152 on the drive sprocket 150 to slip past the drive pawls 168 without re-engaging the drive pawls 168. Thus, when the shank portion rotates in the first direction, torque is transmitted from the shank portion 142 of the arbor 140 to the holesaw holder portion 160, and when the shank portion rotates in the second direction, torque is not transmitted from the shank portion 142 of the arbor 140 to the holesaw holder portion 160.

In alternative embodiments, other types of one-way driving mechanisms can be used. For example, the interface between the shank portion of the arbor and the holesaw holder may include a ratcheting mechanism of the type used on a ratchet wrench, which also may be reversible to allow for driving the holesaw holder when rotating in both directions (e.g., a ratchet head of the type disclosed in U.S. Patent No. 10,335,929, which is incorporated by reference). In further embodiments, the interface between the shank portion of the arbor and the holesaw holder 60 may include a freewheel or free hub body of the type used on a bicycle to enable one-way driving (e.g., the type disclosed in U.S. Patent Application Publication 2007/0089960, which is incorporated by reference). In yet other embodiments, the one-way driving mechanism may include a one-way slip clutch of the type disclosed in U.S. Patent No. 8,789,413, which is incorporated by reference.

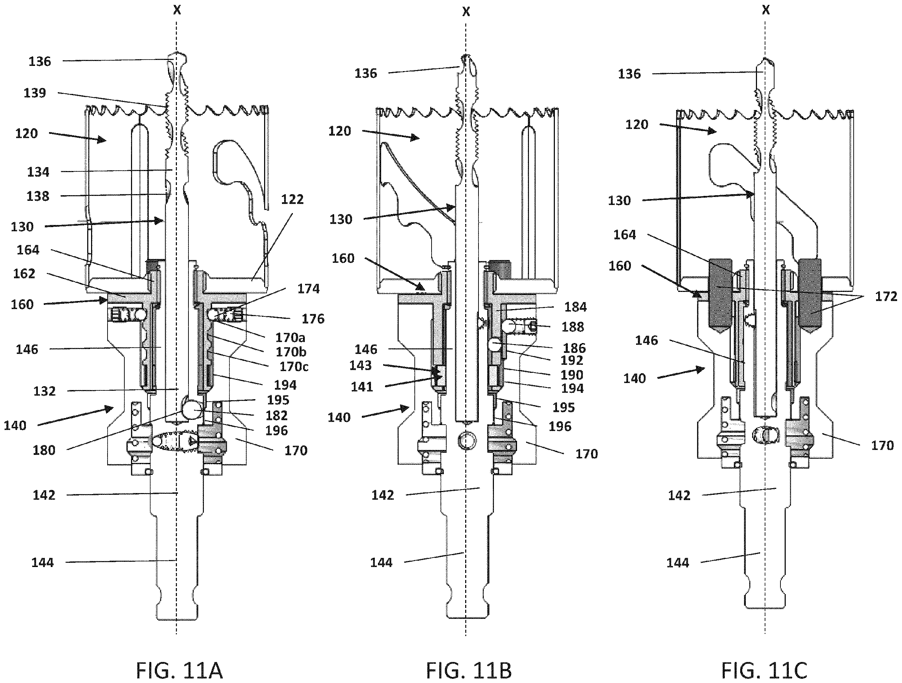

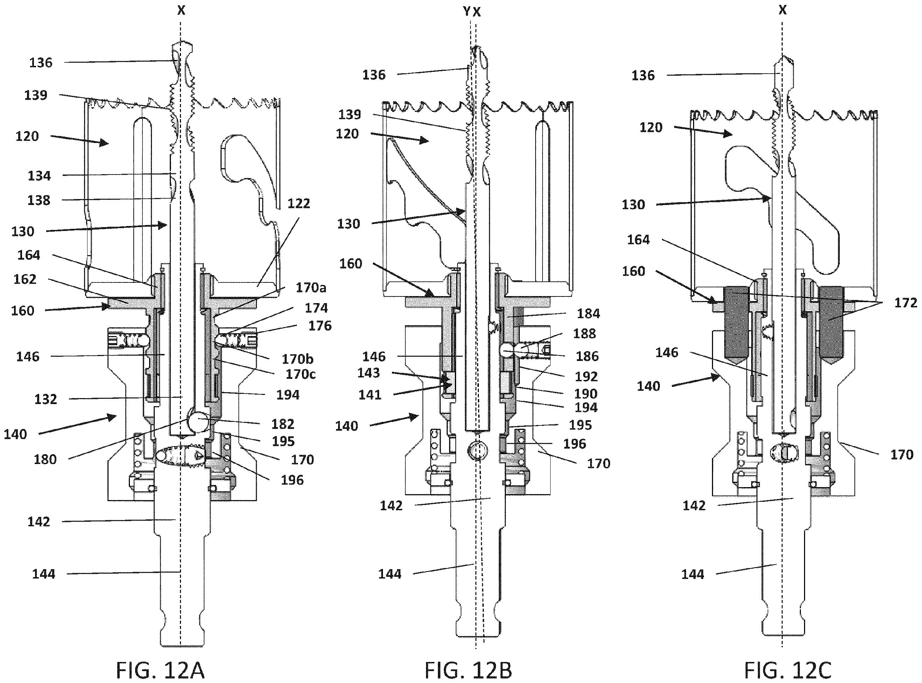

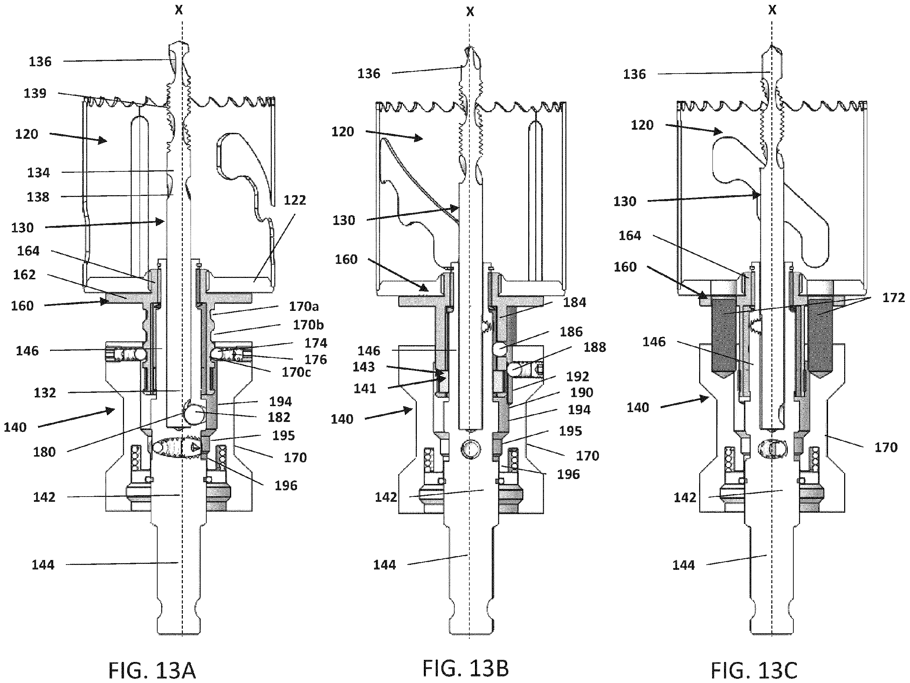

In the embodiment illustrated in FIGS. 10-14, the arbor 140 also includes an actuator, e.g., in the form of a collar 170 receivable over the carrier 166 of the holesaw holder portion 160 and over the bit holder portion 146. The collar 160 is movable axially relative to the holesaw holder portion 160 and the bit holder portion 146 along the axis X between a first position (shown in FIGS. 11A-11C), a second position (shown in FIGS. 12A-12C), and a third position (shown in FIGS. 13A-13C), e.g., by a user grasping and pulling the collar. The collar carries a pair of drive pins 172 that are engageable with lateral openings in the base 122 of the holesaw 120. The drive pins 172 help prevent the holesaw 120 from becoming unthreaded from the threaded stem 164 and/or enhance torque transmission from the arbor 140 to the holesaw 120. When the holesaw 120 is threaded onto the threaded stem 164 and the pins 172 engage the lateral openings (as shown in FIGS. 11A-11C), the base 122 of the holesaw 120 abuts the holesaw holder 160, and the holesaw 120 will rotate in unison with the holesaw holder 160.

The collar 170 carries a pair of detent balls 174 that are biased radially inwardly by ball springs 176 and the selectively engage grooves 178a, 178b, 178c in the outer surface of the holesaw holder portion 160 to retain the collar 160 in one of the first, second, or third positions, respectively. The collar 170 also carries a pusher ball 188 that is configured to engage the cocking ball 186 when the collar 170 is in the second position (shown in FIGS. 12A-12C), as described in more detail below. In addition, the collar has a stepped interior wall 190 that has a front first portion 192 having a first diameter, followed by an intermediate second portion 194 having a second diameter less than the first diameter, followed by an intermediate third portion 195 having a third diameter less than the second diameter, and followed by a rear fourth portion 196 having a fourth diameter less than the third diameter. In other embodiments, the third and fourth portions may be a single portion, each having the third diameter.

In operation, when the collar 170 is in the first position (as shown in FIGS. 11A-11C), the detent balls 174 are retained in the first groove 170a, the drive pins 172 are received in the base of the holesaw 120, and the pusher ball 188 is disengaged from the cocking ball 186. The rear fourth portion 196 of the interior wall 190, with the smallest diameter, engages the retaining ball 182 to maintain the retaining ball 182 in the recess 180 in the pilot drill bit 130, to axially retain the pilot drill bit 130 in the arbor 140. The third portion 194 of the interior wall 190 abuts the band spring 169. In one embodiment, the third portion 194 prevents the band spring 169 from expanding and preventing the drive pawls 168 from moving radially outward to disengage from the one-way ratchet teeth 152. In this first position, the holesaw 120 and the pilot drill bit 130 are retained on the arbor 140, the decoupling mechanism 141 is prevented from decoupling, and the pilot drill bit and the holesaw rotate in unison in both the clockwise and counterclockwise directions. In another embodiment, the third portion 194 allows the band spring 169 to expand, so that the drive pawls 168 may move radially outward to decouple from the one-way ratchet teeth 152 when the bit holder portion 146 is rotated in the counterclockwise direction. In either embodiment, this first position may be used to form a hole a workpiece as described above.

When the collar 170 is moved to the second position (as shown in FIGS. 12A-12C), the detent balls 174 are retained in the second groove 170b, and the drive pins 172 are still received in the base of the holesaw 120. The third portion 195 of the interior wall 190 engages the retaining ball 182, which engages the recess 180 in the pilot drill bit 130 to axially retain the pilot drill bit 130 in the arbor 140. At the same time, the large diameter front portion 192 of the interiorwall 190 is aligned with the band spring 169, allowing it to expand and allowing the drive pawls 168 from moving radially outward to disengage from the one-way ratchet teeth 152. In this second position, the holesaw system is operable in the first mode and the second mode. In the first mode, when the shank portion 142 of the arbor 140 is rotated in the first (e.g., clockwise or CW) direction, the drive pawls 168 are engaged by the one-way drive teeth 152 on the drive sprocket 150, causing the holesaw holder 160 to rotate in unison with the arbor 140. In the second mode, when the shank portion 142 of the arbor 140 is rotated in the opposite second (e.g., counterclockwise or CCW) direction, the one-way drive teeth 152 on the drive sprocket 150 disengage from the drive pawls 168, and the cam surfaces 154 cause the drive teeth 152 on the drive sprocket 150 to slip past the drive pawls 168 without re-engaging the drive pawls 168. Thus, when the shank portion rotates in the first direction, torque is transmitted from the shank portion 142 of the arbor 140 to the holesaw holder portion 160, and when the shank portion rotates in the second direction, torque is not transmitted from the shank portion 142 of the arbor 140 to the holesaw holder portion 160

In the second position of the collar 170, the pusher ball 188 also engages the cocking ball 186, which applies a lateral force to the pilot bit holder portion 146 of the arbor 140, causing the pilot drill bit to rotate to an axis Y that is at an acute angle (e.g., approximately 1° to approximately 10°) to the axis X. This cocking is also enabled by the third diameter of the third portion 195, which is small enough that it prevents the ball 182 from moving out of the recess 180 in the pilot drill bit 130 for axial retention, while allowing the pilot drill bit 130 and the pilot bit holder 146 to pivot a small amount relative to the collar 170. This cocking of the axis of the pilot bit holder portion 146 enhances frictional engagement between the frictional surface 139 and the pilot hole and between the plug and the inner wall of the holesaw. This enhanced frictional engagement enhances the ability of the plug to be removed from the holesaw when operable in the second mode. Thus, the second position may be used to remove a plug from the holesaw by holding the holesaw stationary while causing the pilot drill bit to rotate, which pushes the plug out of the holesaw.

When the collar 170 is in the third position (as shown in FIGS. 13A-13C), the detent balls 174 are retained in the third groove 170c, the drive pins 172 are retracted out of the base of the holesaw 120, the pusher ball 188 is disengaged from the cocking ball 186, and the intermediate diameter intermediate portion 194 of the interior wall 190 is aligned with the retaining ball 182, which may move radially outward to disengage from the recess 180 in the pilot drill bit 130. In this first position, the holesaw 120 and the pilot drill bit 130 may be removed from the arbor 140. In other embodiments, this third position may comprise a first sub-position where only one of the holesaw and the pilot drill bit may be removed from the arbor, and a second sub-position where the other of the holesaw and the pilot drill bit may be removed from the holesaw. Examples of such sub-positions of an actuator are disclosed in U.S. Patent Application No. 17/654,493, filed March 11, 2022, titled "Hole Cutting Accessory for Power Tool," which is incorporated by reference.

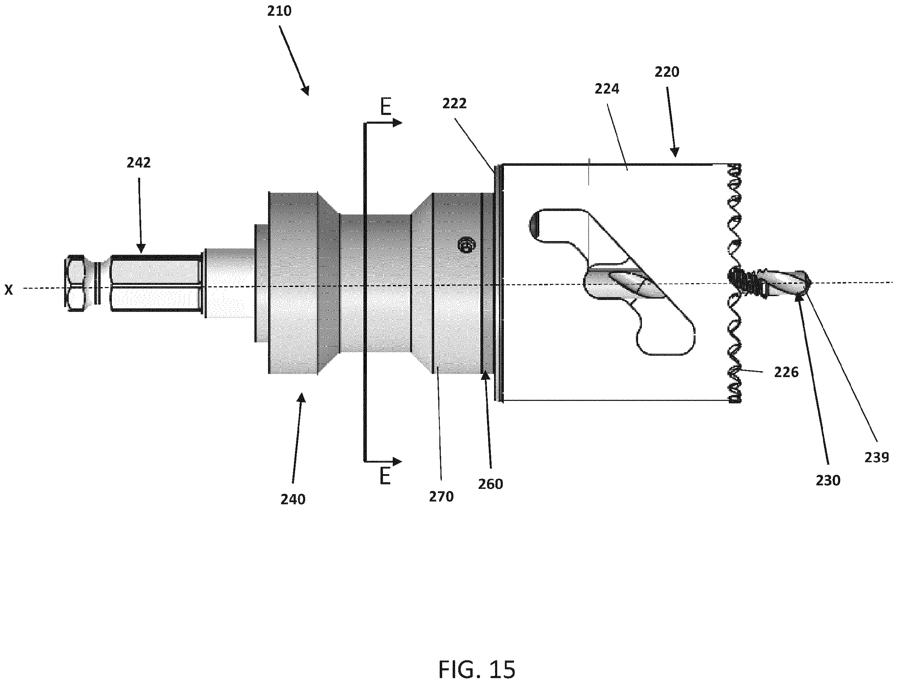

Referring to FIGS. 15-19C, in another embodiment, a holesaw system 210 includes a holesaw 220, an arbor 240 coupleable to the holesaw 220, and a pilot drill bit 230 coupleable to the arbor 240, each extending along an axis X. The holesaw 220, the pilot drill bit 130, and the arbor 240 have a substantially similar design as the holesaw 120, the pilot drill bit 130, and the arbor 140 described above with reference to FIGS. 11-14, except as otherwise noted below. Like parts are indicated by like reference numerals that start with 2 instead of 1 (e.g., 110 and 210, 120 and 220, etc.).

The holesaw system 210 has a different decoupling mechanism 241 than the decoupling mechanism 141 in the holesaw system 110. The decoupling mechanism 241 includes a two-way drive mechanism 243 that is operable in a first mode where the pilot bit holder portion 246 and the holesaw holder portion 260 are configured to rotate in unison with the arbor 240 in both rotational directions (clockwise and counterclockwise), and a second mode where the pilot bit holder portion 246 and the holesaw holder portion 260 are decoupled so that they rotate independently of one another in both rotational directions (clockwise and counterclockwise).

The decoupling mechanism 241 includes an actuator, e.g., in the form of a collar 270 that is movable between a first position where the pilot bit holder portion 246 and the holesaw holder portion 260 are coupled to each other for rotation in unison, and a second position where the pilot bit holder portion 246 and the holesaw holder portion 260 are decoupled from each other. The collar has a stepped interior wall 290 that has a front first portion 292 having a first diameter, followed by an intermediate second portion 294 having a second diameter less than the first diameter, followed by an intermediate third portion 295 having a third diameter less than the second diameter, and followed by a rear fourth portion 296 having a fourth diameter less than the third diameter. In other embodiments, the third and fourth portions may be a single portion, each having the third diameter

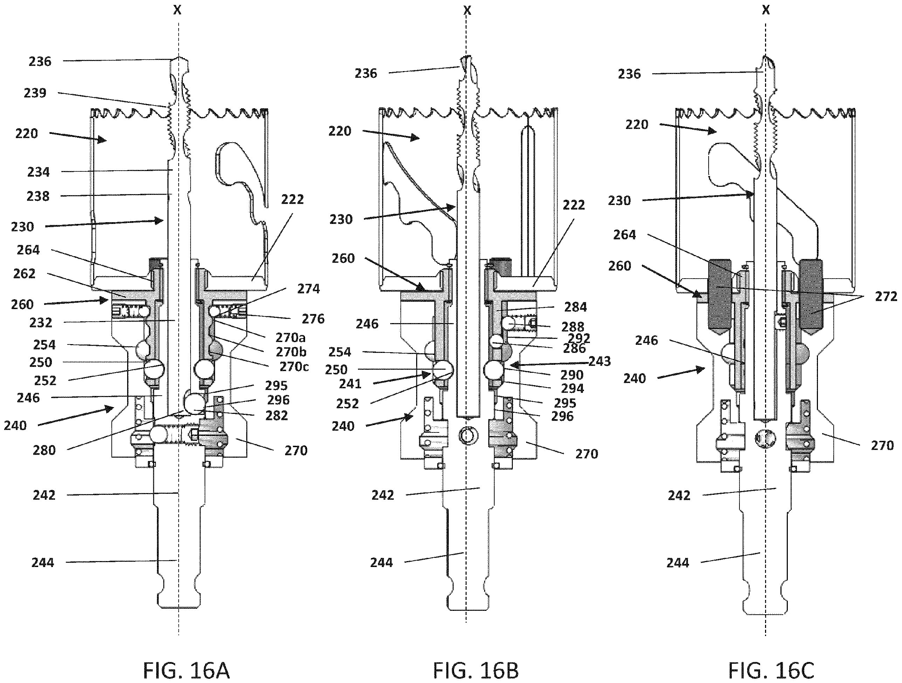

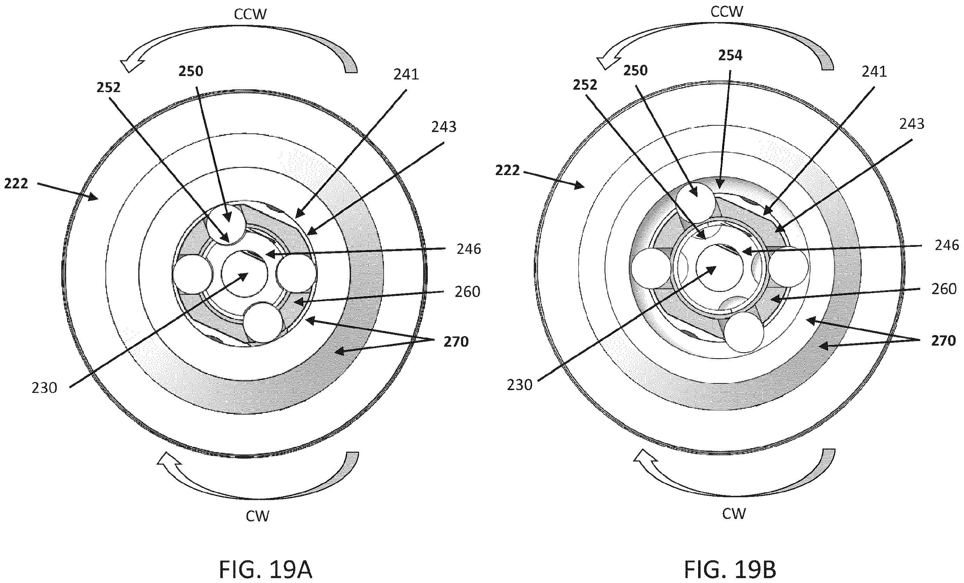

The decoupling mechanism 241 further includes one or more drive members (e.g., balls 250, pins, or detents) carried by the cylindrical portion 284 of the holesaw holder portion 260, one or more driven members (e.g., recesses 252, holes, grooves, or openings) in the bit holder portion 246, and one or more disengagement regions (e.g., pockets 254, grooves, recesses, or holes) formed in the second wall portion 294 of an inner wall 290 of the collar 270. When the collar 270 is in the first position (as shown in FIGS. 16A-16C and 19A), the second wall portion 294 engages the drive ball(s) 250 and forces the drive ball(s) 250 radially inward to engage the recess(es) 252 in the bit holder portion 246. This couples the holesaw holder portion 260 to the bit holder portion 246 so that they rotate in unison and prevents the holesaw holder portion 260 to the bit holder portion 246 from decoupling, regardless of the direction of rotation of the arbor 240. In addition, in this first position, the holesaw 220 is retained on the holesaw holder portion 260 by the threaded stem 264 and the drive pins 272, and the pilot drill bit 230 is retained in the arbor 240 by the retaining ball 282 received in the recess 280 of the pilot drill bit 230 and held in place by the fourth wall portion 296. In other embodiments, the drive member(s) (e.g., balls, pins, or detents) may be coupled to the bit holder portion and the driven member(s) (e.g., recesses, holes, grooves, or openings) may be defined in the holesaw holder portion. This first position is used to form a hole a workpiece.

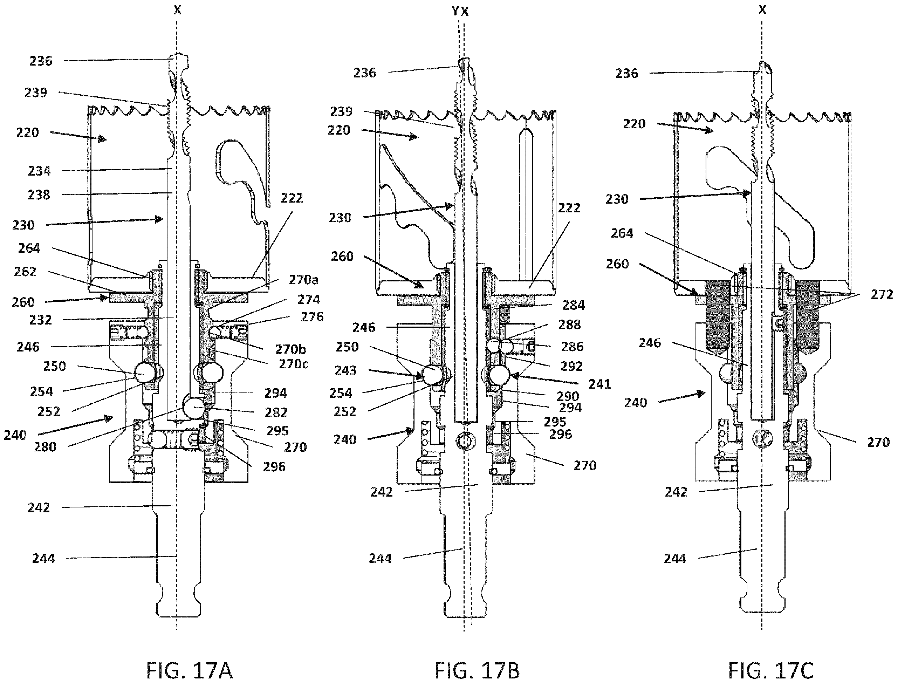

When the collar 270 is in the second position (as shown in FIGS. 17A-17C and 19B), the pocket(s) 254 in the collar 270 is/are aligned with the drive ball(s) 250, allowing the drive ball(s) to move radially outward and disengage from the recess(es) 252 in the bit holder portion 246. The outward movement of the drive ball(s) 250 causes the holesaw holder portion 160 and the pilot bit holder portion 246 to be decoupled, so that they can rotate independently of each other, regardless of the direction of rotation of the arbor 240. At the same time, the pusher ball 288 engages the cocking ball 286, which applies a lateral force to the pilot bit holder portion 246 of the arbor 240, causing the pilot drill bit to rotate to an axis Y that is at an acute angle (e.g., approximately 1° to approximately 10°) to the axis X. This cocking is also enabled by the third diameter of the third portion 295, which is small enough that it prevents the ball 282 from moving out of the recess 280 in the pilot drill bit 230 for axial retention, while allowing the pilot drill bit 230 and the pilot bit holder 246 to pivot a small amount relative to the collar 270. This cocking of the axis of the pilot bit holder portion 146 causes enhances frictional engagement between the frictional surface 139 and the pilot hole and between the plug and the inner wall of the holesaw. This enhanced frictional engagement enhances the ability of the plug to be removed from the holesaw when operable in the second mode. In addition, in this first position, the holesaw 220 is retained on the holesaw holder portion 260 by the threaded stem 264 and the drive pins 272, and the pilot drill bit 230 is retained in the arbor 240 by the retaining ball 282 received in the recess 280 of the pilot drill bit 230. This second position is used to remove a plug from the holesaw by holding the holesaw stationary while causing the pilot drill bit to rotate, which pushes the plug out of the holesaw.

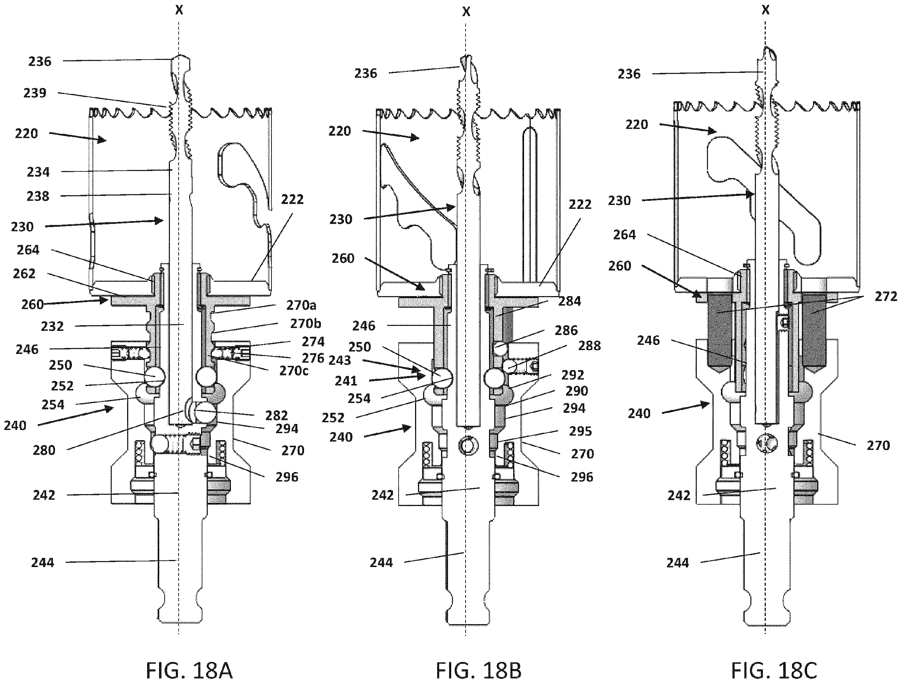

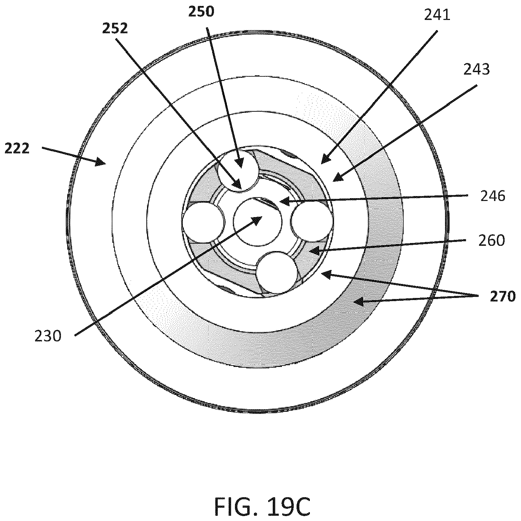

When the collar 270 is in the third position (as shown in FIGS. 18A-18C and 19C), the intermediate wall portion 294 engages the drive ball(s) 250 and forces the drive ball(s) 250 radially inward to engage the recess(es) 252 in the bit holder portion 246. This re-couples the holesaw holder portion 260 to the bit holder portion 246 so that they rotate in unison. Also, the pusher ball 288 is disengaged from the cocking ball 286, which realigns the axis of the bit holder portion 264 with axis X. At the same time, the drive pins 272 are retracted out of the base of the holesaw 220, which enables the holesaw to be unthreaded from the stem 264 of the holesaw holder portion 260, and the intermediate diameter intermediate portion 294 of the interior wall 290 is aligned with the retaining ball 282, which may move radially outward to disengage from the recess 280 in the pilot drill bit 230, enabling removal of the pilot drill bit 230 from the bit holder portion 246. In this third position, the holesaw 220 and the pilot drill bit 230 may be removed from the arbor 240. In other embodiments, this third position may comprise a first sub-position where only one of the holesaw and the pilot drill bit may be removed from the arbor, and a second sub-position where the other of the holesaw and the pilot drill bit may be removed from the holesaw. Examples of such a design of sub-positions of an actuator are disclosed in U.S. Patent Application No. 17/654,493, filed March 11, 2022, titled "Hole Cutting Accessory for Power Tool," which is incorporated by reference.

Example embodiments have been provided so that this disclosure will be thorough, and to fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

Numerous modifications falling within the scope of the appended claims may be made to the exemplary implementations described above.

## Claims

1. A holesaw system comprising:
a holesaw including a base and a generally cylindrical wall with a proximal end coupled to the base and a distal end with a cutting edge;
a pilot drill bit including a front cutting tip, a rear shank portion, and an intermediate portion between the front cutting tip and the rear shank portion; and
an arbor coupleable to the holesaw and to the pilot drill bit, the arbor configured to be operable in a first mode in which the holesaw and the pilot drill bit are rotatable in unison to form a hole in a workpiece and in a second mode in which the pilot drill bit is rotatable independently of the holesaw to remove a plug of material from the holesaw.

2. The holesaw system of claim 1, wherein the arbor is configured to be operable only in the first mode when the arbor rotates in a first direction and to be operable only in the second mode when the arbor rotates in a second direction opposite the first direction.

3. The holesaw system of claim 1, wherein the arbor is operable in the first mode when the arbor rotates in both clockwise and counterclockwise directions and is operable in the second mode when the arbor rotates in both clockwise and counterclockwise directions.

4. The holesaw system of claim 1, wherein the arbor includes a holesaw holder portion couplable to the holesaw, a pilot bit holder portion coupleable to the pilot drill bit, and a decoupling mechanism configured to be operable in the first mode in which the holesaw holder portion is coupled to the pilot bit holder portion to rotate in unison with the pilot bit holder portion, and in the second mode in which the holesaw holder portion is decoupled from the pilot bit holder portion so that the pilot bit holder portion may rotate independently of the holesaw holder portion.

5. The holesaw system of claim 4, wherein the decoupling mechanism comprises a one-way drive mechanism coupled to the holesaw holder portion and to the pilot bit holder portion, the one-way drive mechanism configured to rotatably drive the holesaw holder portion when the pilot bit holder portion rotates in a first direction and configured not to drive the holesaw holder portion when the pilot bit holder portion is rotated in a second direction opposite the first direction.

6. The holesaw system of claim 5, wherein the one-way drive mechanism includes a drive pawl coupled to one of the holesaw holder portion or the pilot bit holder portion and a one-way drive tooth coupled to the other of the holesaw holder portion or the pilot bit holder portion, the drive pawl configured to be driven by the drive tooth when the pilot bit holder portion rotates in the first direction and to slip over the drive tooth when the pilot bit holder portion rotates in the second direction.

7. The holesaw system of claim 4, wherein the decoupling mechanism comprises a two-way drive mechanism coupled to the holesaw holder portion and to the pilot bit holder portion and an actuator movable between a first position and a second position,
wherein, when the actuator is in the first position, the two-way drive mechanism is configured to rotatably drive the holesaw holder portion in unison with the pilot bit holder, regardless of a direction of rotation of the pilot bit holder, and
wherein, when the actuator is in the second position, the two-way drive mechanism is configured to decouple the holesaw holder portion from the pilot bit holder so that the pilot bit holder rotates independent of the holesaw holder portion, regardless of the direction of rotation of the pilot bit holder.

8. The holesaw system of claim 7, wherein the two-way drive mechanism comprises a drive member carried by one of the holesaw holder portion or the pilot bit holder portion and configured to be engageable with a driven member in the other of the holesaw holder portion or the pilot bit holder portion when the actuator is in the first position, and to move out of engagement with the recess when the actuator is in the second position.

9. The holesaw system of claim 8, wherein the actuator is moveable to a third position in which at least one of the holesaw and the pilot bit are removable from the arbor.

10. The holesaw system of any one of the preceding claims, wherein, when operable in the second mode, the arbor is configured to cause the pilot drill bit to be angled relative to the axis of the arbor.

11. The holesaw system of any one of the preceding claims, wherein the intermediate portion includes a frictional surface configured to frictionally engage an interior of a plug formed by the holesaw.

12. The holesaw system of claim 11, wherein the frictional surface comprises a thread.
